# EUROPÄISCHE PATENTSCHRIFT

(11) **EP 0 646 742 B1**
(45) Veröffentlichungstag und Bekanntmachung des Hinweises auf die Patenterteilung: **02.01.1997**
(21) Anmeldenummer: 94113336.5
(22) Anmeldetag: 25.08.1994
(51) Int. Cl.: F16K 3/20

(54) **Schieber mit aufblasbarer Dichtung**
Gate valve with expandable seal
Robinet avec garniture d'étanchéité extensible

(30) Priorität: 03.09.1993 DE 4329856
(43) Veröffentlichungstag der Anmeldung: 05.04.1995
(73) Patentinhaber: Westenberg, Martin, CH-4132 Muttenz (CH)
(72) Erfinder: Westenberg, Martin, CH-4132 Muttenz (CH)
(74) Vertreter: Hertel, Werner, Dipl.-Phys.

(56) Entgegenhaltungen:
- EP-A- 0 587 006
- CH-A- 471 994
- DE-A- 3 606 236
- US-A- 3 711 062

## Beschreibung

Die Erfindung betrifft einen Schieber für Rohrleitungen zum Transport von mit Feststoff beladenen, gasförmigen oder flüssigen Medien mit den im Oberbegriff des Anspruchs 1 angegebenen Merkmalen.

Ein derartiger Schieber ist aus der DE-A-36 06 236 des Anmelders bekannt. Bei längerem Betrieb solcher bekannter Schieber hat sich herausgestellt, daß Feststoffteilchen bis zu einer Korngröße von etwa 100µ an der Ringdichtung vorbei durch den Druckquellenanschluß austreten und in das Entlastungsventil eindringen und dessen Funktion stören und es außer Funktion setzen können. Selbst ein Einsetzen der Ringdichtung in das Schiebergehäuse mit einem hochwirksamen Kleber konnte auf Dauer den Durchtritt solcher Feststoffteilchen an der Ringdichtung vorbei nicht verhindern, vielmehr erhöhte sich mit der Wirksamkeit des Klebers die Gefahr, daß die Ringdichtung selber durchbrach.

Aufgabe der Erfindung ist es, einen Schieber mit den im Oberbegriff des Anspruchs 1 angegebenen Merkmalen derart weiterzubilden, daß auch nach längerem Betrieb ein Durchtreten von selbst feinstkörnigsten Feststoffen an der Ringdichtung vorbei in den Druckquellenanschluß sicher verhindert ist, ohne daß hierfür aufwendige Zusatzarbeiten für ein besonders wirksames Verkleben der Ringdichtung erforderlich ist.

Erfindungsgemäß wird diese Aufgabe durch die im Kennzeichen des Anspruchs 1 in Verbindung mit den in dessen Oberbegriff angegebenen Gattungsmerkmalen gelöst.

Längere Versuche mit erfindungsgemäßen Schiebern haben gezeigt, daß selbst bei Druckdifferenzen von 10⁶Pa (10 bar) zwischen dem druckentlasteten Druckquellenanschluß auf der einen Seite der Ringdichtung und dem bei geöffnetem Schieber strömenden Feststoffstrom auf der anderen Seite der Ringdichtung keine Feststoffe, selbst feinster Korngröße an der Ringdichtung vorbei in den Druckquellenanschluß gelangen.

Bei einer vorteilhaften Ausführungsform ist vorgesehen, daß die Stützfeder mit ihrem Scheitelbereich, der zur Schließfläche des Schließkörpers hin gerichtet ist, am Innenumfang des Hohlraums der ins Schiebergehäuse eingesetzten, druckentlasteten, an ihren Stützwänden rundum anliegenden, unverformten Ringdichtung stützend anliegt.

Bevorzugt ist die Stützfeder eine gewickelte, zwischen ihren Windungen für das Aufblähmedium durchlässige Schraubenfeder, die vorteilhafterweise für die Aufnahme eines quer zu ihrer Längsachse auf ihren Umfang wirkenden Druckes bis zur Höhe von etwa 5 X 10⁵ bis 10⁶ Pa (10 bar) ausgelegt ist.

Weiterhin bevorzugt ist die Ringdichtung als eine im Querschnitt offene, umlaufende Rinne ausgebildet und in eine Ringnut des Schiebergehäuses eingesetzt, in welcher sie vorteilhafterweise klebfrei liegt.

Andere vorteilhafte Weiterbildungen ergeben sich aus den Unteransprüchen.

Die Erfindung wird im folgenden anhand der Zeichnung beispielsweise erläutert. In dieser zeigt:
- Fig. 1: eine Ausführungsform eines Schiebers im Längsschnitt,
- Fig. 2: in vergrößertem Maßstab die Anordnung einer druckbeaufschlagbaren Dichtung und
- Fig. 3: ein Schema einer Schiebersteuerung.

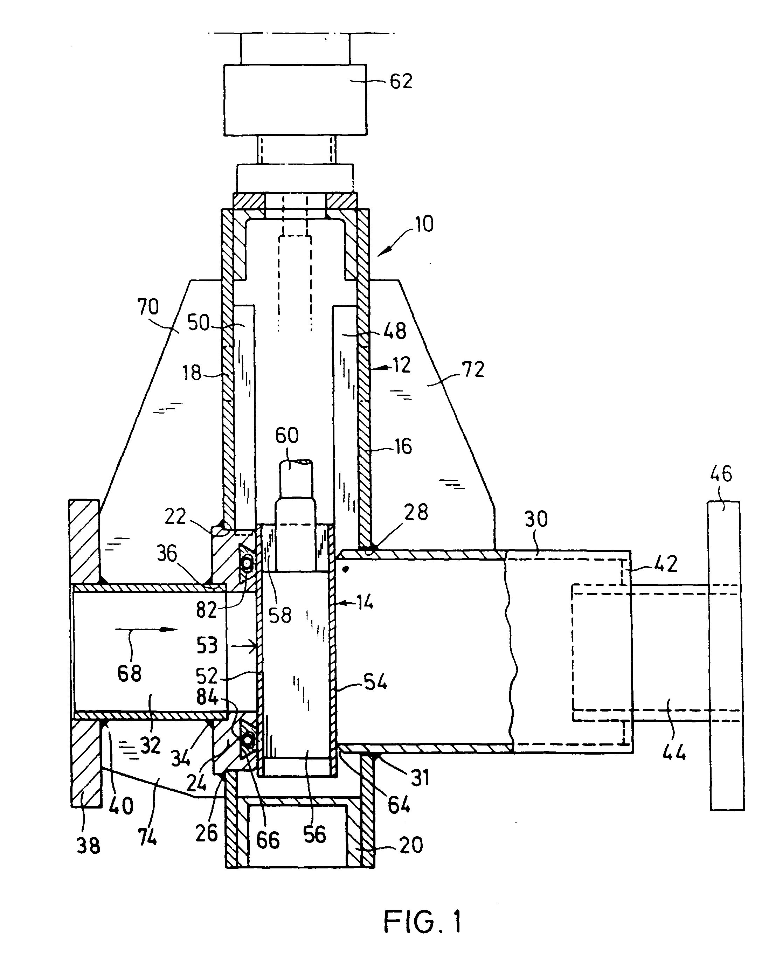

Fig. 1 zeigt im Längsschnitt einen Schieber 10, welcher im Verlauf einer nicht dargestellten Rohrleitung angeordnet ist. Durch die Rohrleitung werden gasförmige oder flüssige Medien transportiert, die einen mehr oder weniger großen Feststoffanteil aufweisen. Der Schieber 10 weist ein Schiebergehäuse 12 auf, in welchem ein Schließkörper 14 verschiebbar ist. Das Schiebergehäuse 12 besteht aus Blechplatten 16 und 18, die über am Rand umlaufende U-Profile 20 miteinander verbunden sind. Die Blechplatte 18 ist mit einer kreisförmigen Ausnehmung 22 versehen, in welche ein Ring 24 über eine umlaufende Schweißnaht 26 eingeschweißt ist. Die gegenüberliegende Platte 16 ist mit einer kreisförmigen Ausnehmung 28 versehen, in welche ein Rohrstück 30 über eine umlaufende Schweißnaht 31 befestigt ist. An dem Ring 24 ist ein Rohrstück 32 über eine Schweißnaht 34 befestigt. Der Ring 24 ist dazu mit einer Ausnehmung 36 ausgebildet. An dem dem Ring 24 gegenüberliegenden Ende ist an dem Rohrstück 32 ein Flansch 38 über eine Schweißnaht 40 angeschweißt, der zur Verbindung mit einer Rohrleitung dient.

Das Rohrstück 30 ist an seinem dem Schiebergehäuse 12 gegenüberliegenden Ende mit einem Ring 42 versehen, in welchen ein Rohrstück 44 eingesetzt ist, dessen Durchmesser dem Durchmesser des Rohrstücks 32 entspricht. Das Rohrstück 44 ragt mit seinem dem Schiebergehäuse 12 hingerichteten Ende in das Rohrstück 30 hinein. An dem gegenüberliegenden Ende des Rohrstückes 44 ist ein Flansch 46 befestigt, welcher zur Verbindung mit einer anschließenden Rohrleitung dient. Der Durchmesser des Rohrstückes 30 ist größer als der des Rohrstückes 32 bzw. 44.

An der Innenseite der Blechplatten 16 und 18 sind Führungsrippen 48 bzw. 50 angeordnet, welcher der Führung des Schließkörpers 14 dienen. Der Schließkörper 14, der aus zwei parallelen Platten 52 und 54 mit dazwischen angeordneten Distanzstücken 56 und 58 besteht, ist an einer Stange 60 angelenkt, welche über eine hydraulische oder pneumatische Kolbenzylindereinheit 62 betätigt wird. Die Außenseite der Schließkörperplatte 54 liegt an der abgeschrägten inneren Stirnfläche 64 des Rohrstückes 30 an. An der eine Schließfläche 53 bildenden Außenseite der gegenüberliegenden Schließkörperplatte 52 liegt bei geschlossenem Schieber eine Dichtung 66 an, die als druckbeaufschlagte Ringdichtung ausgebildet ist. Die Fließrichtung des mit Feststoffanteilen behafteten flüssigen oder gasförmigen Mediums ist durch den Pfeil 68 gekennzeichnet. Fig. 1 zeigt den Schieber im geschlossenen Zustand, d.h. in dem Rohrstück 32 vor der Schließkörperplatte 52 staut sich das zu transportierende Medium, während hinter der Schließkörperplatte 54 in den Rohrstücken 30 und 44 kein Druck des Mediums mehr vorliegt. Zur Verstärkung der Verbindung zwischen dem Schiebergehäuse 12 und den Rohrstücken 32 und 30 sind Verstärkungsrippen 70, 72, 74 vorgesehen.

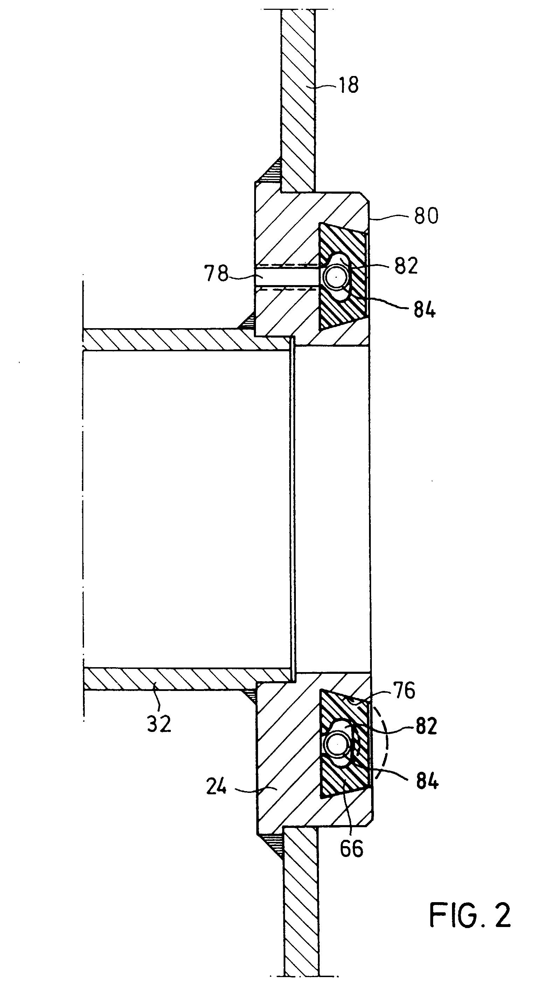

Die Ausbildung und Wirkungsweise der druckbeaufschlagbaren Dichtung ist aus Fig. 2 ersichtlich. Der Ring 24, in welchem die Dichtung 66 angeordnet ist, ist an der dem Schließkörper 14 gegenüberliegenden Seite mit einer hinterschnittenen Ringnut 76 ausgebildet. In die Ringnut 76 ist ein im Querschnitt als offene, umlaufende Rinne ausgebildeter Gummiring, dessen Außenkontur schwalbenschwanzförmig ist, eingeklebt. Die Außenkontur der Dichtung 66 entspricht dem freien Querschnitt der Ringnut 76. Die Ringnut 76 steht über eine Durchgangsbohrung 78 als Druckquellenanschluß mit einer nicht dargestellten Leitung für ein Druckmedium in Verbindung. Als Druckmedium kann eine Flüssigkeit oder vorzugsweise Druckluft verwendet werden. Im nicht beaufschlagten Zustand, d.h. wenn kein Druckmedium durch die Bohrung 78 in die Ringnut 76 eingeleitet wurde, weist die Dichtung eine Gestalt auf, in welcher sie nicht über die Stirnfläche 80 des Ringes 24 hervorsteht. Sobald beispielsweise Druckluft in die Ringnut 76 und damit in den Hohlraum 82 der Dichtung 66 eingeleitet wird, dehnt die Dichtung 66 sich aus und, da die Ausdehnungsmöglichkeit lediglich über die Stirnfläche 80 hinaus gegeben ist, nimmt die Dichtung eine nach außen gekrümmte Gestalt an, wie sie im unteren Teil von Fig. 2 angedeutet ist. In diesem Zustand drückt die Dichtung auf die Schließfläche 53 der Schließkörperplatte 52, wodurch, unterstützt durch den in dem Rohrstück 68 herrschenden Druck, der Schließkörper 14 gegen die Stirnfläche 64 des Rohrstückes 30 drückt. Durch die druckbeaufschlagte Dichtung 66 wird gewährleistet, daß ein dichter Abschluß der an dem Rohrstück 32 anschließenden Leitung gegenüber der sich an das Rohrstück 44 anschließenden Leitung erreicht wird.

In den Hohlraum 82 der Ringdichtung 66 ist eine Stützfeder eingesetzt, die als gewickelte Schraubenfeder 84 ausgebildet ist, die das Aufblähmedium zwischen ihren Windungen durchtreten läßt. Bei der dargestellten Ausführungsform ist die Schraubenfeder 84 aus hochfestem Federdraht mit einer Drahtstärke von etwa 1 mm, einer Steigung von etwa 1,5 mm und einem Zwischenraum zwischen benachbarten Windungen von etwa 0,5 mm gewickelt worden, um quer zu ihrer Längsachse auf ihren Umfang wirkende Drücke bis zur Höhe von etwa 10⁶Pa (10 bar) aufnehmen zu können. Wie in Fig. 2 gezeigt ist, braucht die Schraubenfeder 84 nicht mit ihrem gesamten Außenumfang am gesamten Innenumfang der Ringdichtung 66 anzuliegen. Es reicht, wenn die Schraubenfeder 84 mit ihrem Scheitelbereich, der zur Schließfläche 53 des Schließkörpers 14 hin gerichtet ist, am Innenumfang des Hohlraums 82 der ins Schiebergehäuse 12 eingesetzten Ringdichtung 66 stützend anliegt, und zwar in einem Zustand der Ringdichtung 66, wenn diese druckentlastet an ihren Stützwänden rundum anliegt und unverformt ist, d.h. ihre für den drucklosen Zustand vorgesehene Form einnimmt.

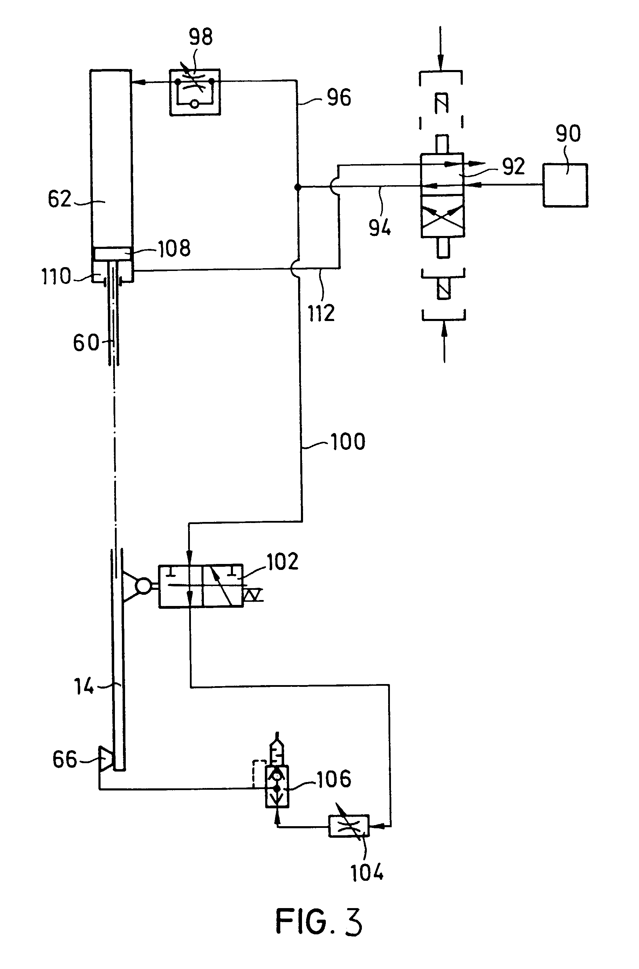

Fig. 3 zeigt schematisch eine pneumatische Steuerung des in den Fig. 1 und 2 dargestellten Druckschiebers. Von einer Druckluftquelle 90 wird über ein 4/2-Wegeventil 92, welches von Hand, pneumatisch oder elektrisch betätigt werden kann, Druckluft in eine Leitung 94 eingespeist, die sich verzweigt in eine Leitung 96, die über ein Drosselrückschlagventil 98 zu der pneumatischen Kolbenzylindereinheit 62 führt, und in eine Leitung 100, die über ein 3/2-Wegeventil 102, das mechanisch betätigbar ist, und über ein Drosselventil 104 zu der druckbeaufschlagbaren Dichtung 66 führt. Zwischen dem Drosselventil 104 und der Dichtung 66 ist ein Schnellentlüftungsventil 106 vorgesehen, über welches bei Öffnen des Schließkörpers 14 die Dichtung 66 entlastet wird. Sobald über das Ventil 92 Druckluft eingespeist wird, wird der Kolben 108 der Kolbenzylindereinheit 62 nach unten verschoben, wodurch der Schließkörper 14 in die Schließstellung gebracht wird. Sobald der Schließkörper 14 seine Schließstellung eingenommen hat, wird über das Ventil 102 Druckluft in die Dichtung 66 geleitet, so daß diese aufgeblasen wird und sich dichtend an die Seitenfläche des Schließkörpers 14 anlegt. Während des Verschiebens des Kolbens 108 in die Schließstellung erfolgt eine Entlüftung des vor dem Kolben liegenden Zylinderraumes 110 über eine Leitung 112. Wenn der Schieber öffnen soll, wird über die Leitung 112 durch Umsteuerung des Ventils 92 Druckluft in den Zylinderraum 110 eingeleitet, so daß der Kolben 108 nach oben schieben kann und dabei den Schließkörper 14 mitnimmt.

Bei der Einleitung des Öffnungsvorganges wird die Leitung 94 druckentlastet und der Zylinderraum 110 unter Druck gesetzt. Durch das eingebaute Drosselventil 98 muß sich zuerst ein gewisser Druck aufbauen, bevor sich der Kolben 108 bewegt. Diese Zeitverzögerung reicht aus, um die Dichtung 66 über das Schnellventil 106 zu entlasten, so daß bei der Bewegung des Schließkörpers 14 in die offenstellung keine Reibung an der Dichtung 66 auftritt.

## Patentansprüche

1. Schieber für Rohrleitungen zum Transport von mit Feststoffen beladenen, gasförmigen oder flüssigen Medien mit einem Schiebergehäuse (12), in welchem ein verschiebbarer Schließkörper (14) in Schließlage mit seiner Schließfläche (53) gegen eine aufgeblähte Ringdichtung (66) anliegt, die in dem Schiebergehäuse (12) fest angeordnet und mit einem umlaufenden Hohlraum (82) ausgebildet ist, der mit einem Druckquellenanschluß (78) in Verbindung steht, und die vor Beginn der Öffnungsbewegung des Schließkörpers (14) mittels eines Entlastungsventils (106) druckentlastet wird, **dadurch gekennzeichnet**, daß eine ringförmige Stützfeder (84) im Hohlraum (82) angeordnet ist, welche die Ringdichtung (66) in deren blähfreien Ausgangslage abstützt.

2. Schieber nach Anspruch 1, **dadurch gekennzeichnet**, daß die Stützfeder (84) mit ihrem Scheitelbereich, der zur Schließfläche (53) des Schließkörpers (14) hin gerichtet ist, am Innenumfang des Hohlraums (82) der ins Schiebergehäuse (12) eingesetzten, druckentlasteten, an ihren Stützwänden rundum anliegenden, unverformten Ringdichtung (66) stützend anliegt.

3. Schieber nach Anspruch 1 oder 2, **dadurch gekennzeichnet**, daß die Stützfeder eine gewickelte, zwischen ihren Windungen für das Aufblähmedium durchlässige Schraubenfeder (84) ist.

4. Schieber nach Anspruch 3, **dadurch gekennzeichnet**, daß die Schraubenfeder (84) für die Aufnahme eines quer zu ihrer Längsachse auf ihren Umfang wirkenden Druckes bis zur Höhe von etwa 5 X 10⁵ Pa bis 10⁶ Pa ausgelegt ist.

5. Schieber nach Anspruch 3 oder 4, **dadurch gekennzeichnet**, daß die Schraubenfeder (84) eine Drahtstärke zwischen etwa 0,5 und 1,5 mm, eine Steigung zwischen etwa 0,8 und 2,5 mm und einen Zwischenraum zwischen benachbarten Drähten von etwa 0,3 bis 1 mm aufweist.

6. Schieber nach Anspruch 5, **dadurch gekennzeichnet**, daß die Drahtstärke etwa 1 mm, die Steigung etwa 1,5 mm und der Zwischenraum etwa 0,5 mm beträgt.

7. Schieber nach einem der vorhergehenden Ansprüche, **dadurch gekennzeichnet**, daß die Ringdichtung (66) in dem Schiebergehäuse (12) in Strömungsrichtung vor dem Schließkörper (14) angeordnet ist.

8. Schieber nach einem der vorhergehenden Ansprüche, **dadurch gekennzeichnet**, daß die Ringdichtung (66) als eine im Querschnitt offene, umlaufende Rinne ausgebildet und in eine Ringnut (76) des Schiebergehäuses (12) eingesetzt ist.

9. Schieber nach Anspruch 8, **dadurch gekennzeichnet**, daß die Ringdichtung (66) klebfrei in der Ringnut (76) liegt.

10. Schieber nach Anspruch 8 oder 9, **dadurch gekennzeichnet**, daß die Ringnut (76) hinterschnitten und die Außenkontur der Ringdichtung (66) entsprechend schwalbenschwanzförmig ausgebildet ist.

11. Schieber nach einem der Ansprüche 8 bis 10, **dadurch gekennzeichnet**, daß die Ringnut (76) eine Durchgangsbohrung (78) als Anschluß für eine Druckquelle (90) aufweist.

## Claims

1. Gate valve for pipelines for transporting solids-containing, gaseous or liquid media with a gate valve body (12), in which a displaceable closing body (14) in the closed position engages with its closing surface (53) on an expanded ring seal (66), which is firmly positioned in the gate valve body (12) and is constructed with a circumferential cavity (82), which is connected to a pressure source connection (78) and which prior to the start of the opening movement of the closing body (14) is pressure-relieved by means of a relief valve (106), characterised in that an annular bearing spring (84) is located in the cavity (82) and supports the ring seal (66) in its expansion-free starting position.

2. Gate valve according to claim 1, characterised in that the top region of the bearing spring (84), which is directed towards the closing surface (53) of the closing body (14), bears on the inner circumference of the cavity (82) of the pressure-relieved, undeformed ring seal (66) engaging all round on its support walls and inserted in the gate valve body (12).

3. Gate valve according to claim 1 or 2, characterised in that the bearing spring is a wound helical spring (84) permeable for the expanding medium between its turns.

4. Gate valve according to claim 3, characterised in that the helical spring is designed for absorbing a pressure up to approximately 5 x 10⁵ Pa to 10⁶ Pa acting on its circumference at right angles to its longitudinal axis.

5. Gate valve according to claim 3 or 4, characterised in that the helical spring (84) has a wire thickness between approximately 0.5 to 1.5 mm, a pitch between approximately 0.8 and 2.5 mm and a gap between adjacent wires of approximately 0.3 to 1 mm.

6. Gate valve according to claim 5, characterised in that the wire thickness is approximately 1 mm, the pitch approximately 1.5 mm and the gap approximately 0.5 mm.

7. Gate valve according to one of the preceding claims, characterised in that the ring seal (66) is placed in the gate valve body (2) upstream of the closing body (14) in the flow direction.

8. Gate valve according to one of the preceding claims, characterised in that the ring seal (66) is constructed as a cross-sectionally open, circumferential channel and is inserted in an annular groove (76) of the gate valve body (12).

9. Gate valve according to claim 8, characterised in that the ring seal (66) is placed in adhesion-free manner in the annular groove (76).

10. Gate valve according to claim 8 or 9, characterised in that the annular groove (76) is undercut and the outer contour of the ring seal (66) is correspondingly dovetail-shaped.

11. Gate valve according to one of the claims 8 to 10, characterised in that the annular groove (76) has a through hole (78) as a connection for a pressure source (90).

## Revendications

1. Vanne pour canalisations, destinées à acheminer des fluides, liquides ou gaz, contenant des matières solides, comprenant un corps de vanne (12), dans lequel un obturateur (14), pouvant être déplacé, s'appuie en position fermée, avec sa surface d'obturation (53) contre une garniture d'étanchéité torique (66) gonflée, qui est montée de manière fixe dans le corps de la vanne (12) et comprend un espace vide périphérique (82), qui est relié à un dispositif de raccordement à une source de pression (78), et qui, avant le début du mouvement de fermeture de l'obturateur (14), est détendu à l'aide d'une soupape de sûreté (106), caractérisée en ce qu'un ressort de support cylindrique (84) est monté dans l'espace vide (82), lequel sert d'appui à la garniture d'étanchéité torique (66) dans sa position finale dégonflée.

2. Vanne selon la revendication 1, caractérisée en ce que la zone frontale du ressort de support (84), orientée vers la surface d'obturation (53) de l'obturateur (14), s'appuie pour former un support contre la périphérie interne de l'espace vide (82) de la garniture d'étanchéité torique (66) insérée dans le corps de la vanne (12), détendue, s'appuyant sur toute sa périphérie sur ses parois d'appui, non déformée.

3. Vanne selon la revendication 1 ou 2, caractérisée en ce que le ressort de support est un ressort à boudin (84) bobiné, qui laisse passer le fluide de gonflement entre ses spires.

4. Vanne selon la revendication 3, caractérisée en ce que le ressort à boudin (84) est conçu pour supporter une pression allant jusqu'à environ 5 x 10⁵ Pa à 10⁶ Pa, qui s'exerce sur la périphérie dudit ressort à boudin, transversalement par rapport à son axe longitudinal.

5. Vanne selon la revendication 3 ou 4, caractérisée en ce que le ressort à boudin (84) est conçu avec un fil dont l'épaisseur est comprise entre environ 0,5 et 1,5 mm, un pas compris entre environ 0,8 et 2,5 mm et un espace entre les fils voisins compris entre environ 0,3 et 1 mm.

6. Vanne selon la revendication 5, caractérisée en ce que l'épaisseur du fil est égale à environ 1 mm, le pas à 1,5 mm environ et l'espace intermédiaire à 0,5 mm environ.

7. Vanne selon l'une quelconque des revendications précédentes, caractérisée en ce que la garniture d'étanchéité torique (66) est montée dans le corps de vanne (12), en amont de l'obturateur dans le sens de l'écoulement.

8. Vanne selon l'une quelconque des revendications précédentes, caractérisée en ce que la garniture d'étanchéité torique (66) est conçue comme une goulotte périphérique, à section ouverte et est insérée dans une rainure circulaire (76) du corps de vanne (12).

9. Vanne selon la revendication 8, caractérisée en ce que la garniture d'étanchéité torique (66) est insérée sans colle dans la rainure circulaire (76).

10. Vanne selon la revendication 8 ou 9, caractérisée en ce que la rainure circulaire (76) est contre-dépouillée et la périphérie extérieure de la garniture d'étanchéité torique (66) est conçue en forme de queue d'aronde.

11. Vanne selon l'une quelconque des revendications 8 à 10, caractérisée en ce que la rainure circulaire (76) est munie d'une forure traversante (78), qui sert de raccordement à une source de pression (90).
